# EUROPEAN PATENT SPECIFICATION

(11) **EP 3 336 626 B1**
(45) Date of publication and mention of the grant of the patent: **14.07.2021**
(21) Application number: 16203687.5
(22) Date of filing: 13.12.2016
(51) Int. Cl.: G06F 12/10

(54) **MEMORY ANALYSIS FOR INDUSTRIAL CONTROLLERS**
SPEICHERANALYSE FÜR INDUSTRIELLE STEUERGERÄTE
ANALYSE DE MÉMOIRE POUR ORGANES DE COMMANDE INDUSTRIELS

(43) Date of publication of application: 20.06.2018
(73) Proprietor: CODESYS Holding GmbH, 87439 Kempten (DE)
(72) Inventor: Pfob, Michael, 87477 Sulzberg-Moosbach (DE); Werner, Bernhard, 87437 Kempten (DE)
(74) Representative: Valvoda, Jakob

(56) References cited:
- Weihaw Chuang ET AL: "Accelerating Meta Data Checks for Software Correctness and Security", Journal of Instruction-Level Parallelism, 1 January 2007 (2007-01-01), pages 1-26, XP055367915, Retrieved from the Internet: URL:https://www.jilp.org/vol9/v9paper10.pd f
- SIMPSON M S ET AL: "MemSafe: Ensuring the Spatial and Temporal Memory Safety of C at Runtime", SOURCE CODE ANALYSIS AND MANIPULATION (SCAM), 2010 10TH IEEE WORKING CONFERENCE ON, IEEE, PISCATAWAY, NJ, USA, 12 September 2010 (2010-09-12), pages 199-208, XP031775367, ISBN: 978-1-4244-8655-7

## Description

### TECHNICAL FIELD

The present invention relates to analysis of memory of industrial controllers. A respective method, an industrial controller and a system with a debugger are defined.

### BACKGROUND

Industrial controllers are digital computers in industrial environments that have been adapted for the control of various industrial and manufacturing processes, such as processes involved with assembly lines or various robotic devices, or any activity that requires real-time or high reliability control and process fault diagnosis. Industrial controllers typically replace hardwired relays. Industrial controllers could also be regarded as hard real-time environments, wherein output results must be produced in response to input conditions within a limited period of time in order to avoid unintended operation of the controlled processes and respective devices. Programming of industrial controllers is therefore subject to particular requirements that differ from programming of general purpose computing devices.

Programs for industrial controllers are written in special applications on personal computers and are then downloaded to the industrial controllers via direct connections or via dedicated networks. Typical programming languages that emphasize logical organization of operations include function block diagram (FBD), ladder diagram (LD), structured text, instruction list and sequential function chart (SFC). Under the IEC 61131-3 standard, 3rd edition, industrial controllers may also be programmed using modern programming language concepts, such as pointers, interfaces and the like, which enable a flexible use of available memory resources. However, this flexibility may also result in faulty memory utilization leading to errors in operation of the industrial controller.

In W. Chuang et al.: "Accelerating Meta Data Checks for Software Correctness and Security", Journal of Instruction-Level Parallelism, 2007, metadata checks for software based on checking correctness of pointers are described. In order to determine whether a pointer reference is correct, metadata is checked when a pointer is dereferenced to verify properties of the pointer or the referenced object.

M. Simpson et al.: "MemSafe: Ensuring the Spatial and Temporal Memory Safety of C at Runtime", Proceedings of SCAM, 2010, is directed at memory access violations in C programs. A compiler analysis and transformation approach for ensuring memory safety of C programs is disclosed that is based on modelling temporal errors as spatial errors, a metadata representation that combines features of object- and pointer-based approaches, and a dataflow representation that is used to remove unneeded checks.

Hence, one object of the present invention is to increase security and reliability of programmable industrial controllers.

### SUMMARY

The present invention is defined by a method for analyzing allocated memory of an industrial controller, storage media, an industrial controller and a system as defined in the independent claims. Preferred embodiments are defined in the dependent claims.

According to one aspect of the present invention, a computer-implemented method is defined. The method comprises the steps of providing at least one program for execution on an industrial controller, analyzing memory allocated to the at least one program on the industrial controller, based at least in part on metadata of the at least one program, identifying at least one fault condition in the memory, and in response to the identified at least one fault condition, providing a notification including an indication of the at least one fault condition.

The method enables an automated analysis of allocated memory using metadata of the program on the industrial controller. Based on a condition of the memory according to the metadata of the program, which may include organization of the data within the memory, (pre-initialized) values of the data in the memory and the like, the method may identify at least one fault condition, which may be indicative of an erroneous use of the allocated memory by the program. The identification may take into account at least a part of the metadata of the program. Hence, the fault condition is linked to the program and/or its functionality, which may be specified in the metadata. Since the fault condition directly relates to the program, the identification of the fault condition differs from alarm management or similar approaches that track input or output values or evaluate resulting values with regard to general requirements of the industrial controller (or the controlled devices or processes), which completely disregard any executing program. The identified fault conditions may be notified in order to initiate one or more actions to remedy possible errors of the industrial controller.

Preferably, the industrial controller may be any kind of industrial device, such as a programmable logic controller (PLC) or programmable logic relay (PLR) that may be used to control devices in an industrial or manufacturing environment. For example, the industrial controller may execute the program to control (e.g. read and write values of) one or more actors and/or sensors of one or more (robotic) devices in the industrial or manufacturing environment. The program may be written using any kind of suitable programming language, such as a programming language according to the IEC 61131-3 standard, 3rd edition. The program may be developed and programmed and compiled for a particular type of the industrial controller using a development or programming environment and a respective compiler, which may be provided on an external computing device. Accordingly, the program may be downloaded to the industrial controller. The industrial controller may allocate available memory resources to the program in order to enable execution of the program on the industrial controller. During execution the program may access, modify, read and/or write data in the allocated memory according to individual instructions as defined by code of the executing program. Accordingly, the analysis and a respective identified fault condition may reflect a state of the program that is ready for execution, that is executing or that has been executed on the industrial controller.

Preferably, the program includes executable code, wherein at least parts of the executable code may access, read or write data in the memory and/or define a processing on the data resulting in a definition of a processing of the industrial controller with regard to the controlled processes and devices.

The program may be generated based on a sequence of instructions in a source code that may define data structures and a program flow of the program for the industrial controller. Hence, at least a part of the code or at least some instructions of the program may directly affect the allocated memory or states of the industrial controller. The program may be generated using a compiler, which may create the metadata based on position of code and/or position of data within the program or within allocated memory. The metadata may further include information about structured data, data fields and objects used by the program, for example, and/or respective locations of data structures in memory. Even though the memory may be freely allocated to the program in the industrial controller, the data structures directly reflect states of the controlled process, such as input data from sensors of a controlled (robotic) device or values defining a state to be set on actors of a (robotic) device, which result from the processing of the program on the industrial controller. Hence, the data structures in the memory directly reflect a technical configuration of a controlled process or respective one or more controlled devices.

The metadata may represent knowledge of the compiler about memory structures. The metadata may be generated automatically by the compiler without further analyzing a functionality of the program. Rather, the metadata may reflect a layout of memory utilized by the program based on individual instructions of the program related to allocation of memory and/or access to memory. This knowledge about memory-related instructions in the source code of the program is used by the compiler to generate the metadata, which are used as a basis to analyze the allocated memory and/or identify the fault conditions in the memory.

The present invention enables a flexible, yet safe and reliable utilization of memory resources on industrial controllers by automatically analyzing, for any kind of program on the industrial controller, the memory allocated to the program and notifying identified fault conditions that may be used to trigger further actions to remedy any faults or errors. Accordingly, the automated memory analysis directly results in a safe and reliable operation of the industrial controller, which avoids unexpected errors in the controlled industrial process due to misoperation of the industrial controller.

In the present invention, said analyzing includes scanning the memory to identify one or more data structures in the memory. The one or more data structures are verified based at least in part on the metadata of the program. For example, the metadata may refer to program instructions or code of the program that reference or access the respective identified data structures in the memory.

In a preferred embodiment, the at least one program includes at least one pointer or reference to access the at least one data structure in the memory. A pointer or reference may be part of an instruction of the program or may be part of an object or any other entity generated by the program. For example, a pointer or reference may point to an instance of an object, structured data or any other functional element declared and instantiated in the program. The object, structured data or functional element of the program may have a type and the pointer or reference may be used to access (a corresponding data structure of) the object, structured data or functional element in the memory. A verification of a data structure corresponding to an object, structured data or functional element of the program may include a verification, whether the pointer or reference points to a data structure of the declared type and/or to a pre-defined value, such as NULL, which may indicate that the object, structured data or functional element of the program has been declared or instantiated, however, not yet fully initialized within the flow of the program.

Program instructions or code of the program may define objects, data structures or functional elements by, for example, declaring a type of the object data structure or functional element and/or by initializing the object, data structure or functional element to an initial value. The data structures may be of any type used in modern programming languages, such as Bool, String, scalar or integer types and the like. An object or functional element may include a combination of data structures and further define functionality of the object with regard to their data structures. An object or functional element may be accessed using a pointer or reference to a memory location at which an instance of the object or functional element is stored. During generation of the program for the industrial controller, the metadata may include information referring to the respective data types and corresponding program instructions or code, such as variables referenced by the program instructions or code of the program. Preferably, verification of a data structure in the memory may include determining a data type of a variable related to the data structure and determining whether the variable has a value corresponding to the data type.

In another embodiment, said verifying includes determining one or more parameters of the at least one data structure and checking the one or more parameters against corresponding metadata of the at least one program. Further to a type of a variable, which may be matched to a value of the variable in the memory, the metadata may indicate that instructions of the program refer to arrays or other structured data and respective parameters may be checked against the data structure in the memory. For example, a length and termination of an array or the like may be checked with regard to a definition of the array or program instruction according to the metadata.

The at least one fault condition is identified responsive to said checking of the one or more parameters against the corresponding metadata of the at least one program. Said checking may be based on a set of rules, which may define correct and incorrect configurations of data structures in the memory with regard to metadata of the program. The set of rules may further include an indication of a probability of a possible faulty operation for an individual configuration of the data structure. For each detected incorrect configuration of a data structure or if no correct configuration of a data structure can be determined based on the set of rules, a fault condition may be identified and notified. To identify a fault condition, respective indications of probability of faulty operation for a plurality of individual configurations of data structures can be combined to generate a final score. The score may be compared with a threshold, which may, for example, define a defensive fault-free analysis or a more flexible use of memory. Accordingly, the fault condition may be notified only if the score exceeds the threshold or meets other conditions.

In a preferred embodiment, in response to the identified fault condition, the industrial controller is transitioned into a safe state. A safe state or fault state may be defined as a state of the industrial controller, which may guarantee that the process controlled by the industrial controller does not result in a faulty and possibly dangerous or unstable operation of the devices controlled by the industrial controller. The transitioning of the industrial controller into the safe state may also be based on a score of identified fault conditions indicating a possibly faulty operation. Accordingly, as a direct result of the automated analysis of the memory of the industrial controller according to aspects or embodiments of the present disclosure, the industrial controller is transitioned into the safe state, which directly affects the controlled process, for example, by transitioning the controlled (robotic) devices into corresponding safe states.

In one embodiment, a memory space is statically allocated to the program by a compiler. During generation of the program, the compiler may analyze the data structures and functional elements defined and declared in a source code of the program and may allocate the memory space to the program statically. In contrast to programming languages for general purpose computers, where memory space may be allocated dynamically, an object of a class or a data structure corresponding to structured data or functional elements of the program are not created at runtime, but the compiler defines the required memory space for the object, structured data or functional element at compile time. The compiler may include at least some information on the layout of the memory space into the metadata. The created objects, structured data and other functional elements of the program for the industrial controller cannot be moved in the memory of the industrial controller at runtime and also cannot be destroyed in the memory.

The compiler may define a size and layout of the memory space and may assign to each variable of the program a relative address in the memory space. Preferably, the compiler may place the generated code into a separate code area. However, it is to be understood that the present disclosure is not restricted to a particular memory placement and the generated code may be placed in the same memory space as the data structures of the program. The memory of the industrial controller may store the data structures and the program. Any access by the program to the memory space, which may include function calls and/or access to data structures in the memory, may be defined using a relative offset in the allocated memory space. The compiler may generate a list of memory locations at which such access may take place. The metadata of the program may include this information, including relative offsets and at least one list of memory locations.

In another embodiment, the method may further comprise downloading the at least one program to the industrial controller and relocating the memory space to the memory of the industrial controller. The downloading of the program may include a determination of available memory resources at the industrial controller and allocation of the available memory to the program. The allocation includes a relocation of the relative offsets of variables and functions to new addresses in the memory of the industrial controller. The relocation may be reflected in the metadata. Accordingly, information required for analyzing the memory, including one or more of position of instructions and/or code, functions or other functional elements as well as position of data structures, such as structured data, arrays, functional elements and/or objects, in any combination, are available from the metadata in order to identify conditions of the memory.

In yet another embodiment, the program is executed on the industrial controller within a runtime system. The runtime system may be configured to retrieve data reflecting the allocated memory (and its values) on the industrial controller and/or metadata of the program, to enable an analysis of the memory allocated to the program on the industrial controller.

In a preferred embodiment, the memory is analyzed on the industrial controller using the runtime system. The memory may be analyzed synchronous to the execution of the program on the industrial controller or asynchronous to the execution of the program on the industrial controller. The runtime environment may determine whether the industrial controller has sufficient resources to perform synchronous analysis of the memory during execution of the program on the industrial controller, to guarantee possible constraints or requirements of the industrial controller, such as real-time requirements. In case of limited resources on the industrial controller, the memory may be analyzed asynchronously to the execution of the program on the industrial controller. A synchronous analysis may be enforced if a suspicious or faulty operation of the industrial controller is detected.

In yet another embodiment, the memory is analyzed based on a core dump of the memory. The core dump may be analyzed using functions defined by the program, or using a runtime environment on the industrial controller, or using a connected debugger. The core dump of the memory of the industrial controller may be either directly accessed from within the program or by the runtime environment or may be uploaded from the industrial controller to the debugger, which may perform the analysis of the core dump based on the metadata. The debugger may access the metadata of the program either from a source of the program or may up-load the metadata from the industrial controller. The debugger may be (implemented on) a computing device configured to perform the analysis of the memory based on the core dump. The debugger may be connected to the industrial controller via a direct link or via a network.

In a preferred embodiment, the industrial controller is a programmable logic controller (PLC).

According to yet another aspect of the present invention, one or more media storing instructions thereon are defined, wherein the instructions, when executed on a computing device, configure the computing device to perform a method according to one embodiment of the present invention. Preferably, the computing device may be an industrial controller or a computing device connected to an industrial controller configured to execute a debugger. A program for execution on the industrial controller may be provided. The computing device may be configured to analyze a memory allocated to the program on the industrial controller based on the metadata of the program, identify at least one fault condition in the memory, and in response to the identified at least one fault condition, provide a notification including an indication of the at least one fault condition, in order to preferably resolve the at least one fault condition.

According to yet another aspect of the present invention, an industrial controller is defined, wherein the industrial controller comprises at least one processor and a memory resource. The at least one processor is configured to execute a program for the industrial controller and the memory resource includes memory allocated to the program. The at least one processor is configured to analyze the allocated memory based on metadata of the program, identify at least one fault condition in the memory, and in response to the identified at least one fault condition, provide a notification including an indication of the at least one fault condition. Preferably, the at least one processor is further configured to react on the identified at least one fault condition, for example, by transitioning the industrial controller into a safe state, as discussed with regard to one or more aspects or embodiments of the present disclosure. However, it is to be understood that a reaction is not limited to transitioning of the industrial controller to the safe state, but may include any reaction to suitably handle the fault condition to avoid misoperation of the industrial controller and/or of the controlled devices or processes.

The industrial controller provides for a secure and fault-free execution of programs on the industrial controller, resulting in a reliable operation of the industrial controller.

It is to be understood that the industrial controller may be configured according to one or more embodiments of aspects of the present invention in any combination.

According to yet another aspect, a computing device implementing a debugger is provided, wherein the debugger may be configured to receive a core dump of a memory allocated to a program on an industrial controller, wherein the at least one program is provided for execution on the industrial controller. The debugger may be configured to identify at least one fault condition in the memory based on metadata of the program and in response to the identified at least one fault condition, provide a notification including an indication of the at least one fault condition. The debugger may further initiate or trigger a function that may resolve the at least one fault condition.

According to a further aspect, a system is provided, the system comprising a debugger and at least one industrial controller configured to execute at least one program, wherein the debugger is configured to analyze a memory allocated to the program on the industrial controller based on metadata of the program, identify at least one fault condition in the memory, and in response to the identified at least one fault condition, provide a notification including an indication of the at least one fault condition in order to initiate handling of the at least one fault condition. The debugger may form part of the industrial controller or may be implemented on an external computing device which may be connected to the industrial controller via a direct link or via a network. Either the at least one industrial controller or the debugger or both may be configured according to one or more embodiments of aspects of the present invention.

It is to be understood that embodiments of the method of the disclosure may include any processing steps corresponding to a functional configuration of the industrial controller or the system according to one or more embodiments or aspects of the disclosure. Similarly, the industrial controller and the system according to one or more embodiments of the disclosure may include components and features that are configured according to methods steps as defined in one or more embodiments of the method according to the disclosure, in any combination.

### BRIEF DESCRIPTION OF THE DRAWINGS

Specific features, aspects and embodiments of the present disclosure and their advantages will be better understood with regard to the following description and accompanying drawings where:
- Fig. 1: shows a system according to one embodiment of the present disclosure;
- Fig. 2: illustrates a flow chart of a method according to one embodiment of the present disclosure; and
- Fig. 3: shows a schematic diagram reflecting generation of a program for an industrial controller and analysis of memory applicable in one embodiment of the present disclosure.

### DETAILED DESCRIPTION

In the following description, reference is made to drawings which show by way of illustration various embodiments. Also, various embodiments will be described below by referring to several examples. It is to be understood that the embodiments and examples may include changes in design, structure and processing without departing from the scope of the claimed subject matter.

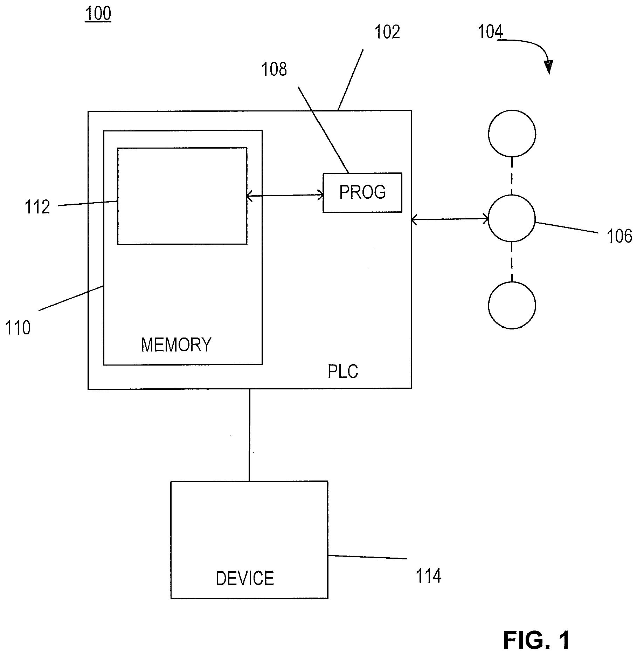

Fig. 1 shows a schematic illustration of a system according to one embodiment of the present disclosure. The system 100 includes an industrial controller 102, such as a programmable logic controller (PLC). It is to be understood that the industrial controller 102 may be any kind of device controlling a process in an industrial or manufacturing environment, such as a programmable logic relay (PLR). The industrial controller 102 may be configured to control a process 104, such as an industrial or manufacturing process. The industrial controller 102 may control at least one device 106 involved in the industrial or manufacturing process 104. The device 106, such as a (robotic) device including sensors, actors or both, in any combination and number, may provide as output a current state to the industrial controller 102 and may receive from the industrial controller 102 as input a configuration of the device 106, such as a configuration of the actors of the device 106.

The industrial controller 102 may execute a program 108 to control the process 104. For example, the industrial controller 102 may include one or more processing units that may execute the program 108. The industrial controller 102 may further include one or more memory resources comprising memory 110 that may be allocated to the program 108. The memory 112 may include data structures for respective variables and functional elements of the program 108. Furthermore, the memory resources 110 may store the program 108 either in the same memory 112 or in a different code location.

The program 108 may include code that may access the memory 112, for example, by manipulating or writing values to locations in the memory 110 or reading values from the memory 110. The program 108 may be programmed using any programming language for industrial controllers, such as a language specified under the IEC 61131-3 standard, 3rd edition. Tthe program 108 may include code related to pointers or references to objects or arrays in memory and other programming language concepts enabling a flexible use of available memory resources.

The industrial controller 102 may be connected to a device 114. The device 114 may download the program 108 to the industrial controller 102 and may further manage processing of the industrial controller 102. For example, the device 114 may be used to generate the program using a compiler, which may be configured to compile source code of the program 108 for the industrial controller 102 and generate metadata of the program 108.

The memory 112 allocated to the program 108 on the industrial controller 102 may be analyzed based on the metadata of the program 108 to identify any fault condition in the memory 112. For example, the program 108 may define functionality for analyzing the allocated memory 112. Additionally or as an alternative, the industrial controller 102 may include a runtime environment executing the program 108 or another component, which may include means to analyze the memory 112 based on the metadata of the program 108. The means may either include own functionality to analyze the memory 112 or may access the functionality of the program 108 to analyze the memory 112. Additionally or as an alternative, the device 114 or another device (not shown) may be configured as a debugger, which may be configured to analyze the memory 112 based on the metadata of the program 108. In this case, the runtime environment or any other component of the industrial controller 112 may create a core dump of the memory 112, which can be transmitted to the debugger in order to perform the analysis.

Based on a result of the analysis, such as at least one identified fault condition in the memory 112 (or a respective core dump), a component of the industrial controller 102 or the debugger may generate a notification including an indication of the at least one fault condition. The notification may be processed by the program 108, which may define actions to remedy the fault condition. Additionally or as an alternative, the notification may be provided to a user operating the device 114, the industrial controller 102 or the process 104. For example, a visual and/or acoustical notification may be provided to the user, for example, via a GUI on an electronic device. Additionally or as an alternative, the notification can be provided to a processing component, such as a processing component on the industrial controller 102 or on the device 114 that may automatically initiate one or more actions to remedy the fault condition in order to avoid errors in the process 104. For example, the industrial controller 102 may be automatically transitioned into a safe state. Additionally or as an alternative, the program 108 may include dedicated code that is to be executed in response to a detected fault condition in the memory 112 and the program 108, the industrial controller 102 or the user may trigger respective code or code parts of the program 108 to handle the fault condition.

The actions may include one or more of logging of the fault condition, sending the notification to one or more further recipients, automatically stopping the controlled devices of the process and/or setting the output values of the industrial controller 102 to values defining the safe state. As yet another option or alternative, the program 108 may be re-initialized and executed in a further attempt on the industrial controller 102.

The analysis of the memory 112 may be based on the metadata of the program 108 that may indicate a relationship between code or instructions of the program 108 and data structures or memory locations in the memory 112. The analysis may be based on one or more rules including one or more of a determination, whether code of the program 108 has been changed; a determination, whether pointers or references to instances of functional elements of the program 108 are pointing to the value NULL or to objects having a type as declared for the pointer or reference; whether variables of type BOOL have a value of 0 or 1 (or corresponding values for False and True, respectively); a determination whether variables of the type STRING are terminated using a predefined value, such as 0, within the declared string length; whether pointer or references to Scalar types are pointing to NULL or correctly aligned memory; and/or checking of overwrites of arrays by initializing the memory space outside of a valid array memory area with predefined patterns. It is to be understood that the above rules are examples only and that the memory 112 may be analyzed using additional rules or less rules or a different set of rules, in any combination.

Each violation of a rule may be further evaluated and automatically notified to a user or a connected process in order to remedy the identified fault condition.

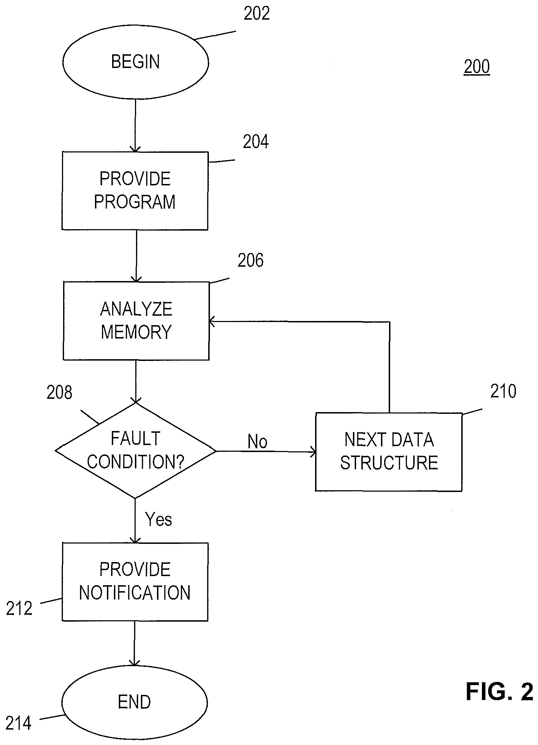

Fig. 2 illustrates a flow chart of a method according to one embodiment of the present disclosure. The method 200 may start in item 202 and may proceed with item 204, wherein at least one program for execution on an industrial controller is provided. The industrial controller may be a PLC, such as the industrial controller 102 of Fig. 1.

The program may include executable code and may be compiled for the industrial controller. For example, the at least one program may include the program 108 as shown in Fig. 1. Responsive to a download and/or an execution of the at least one program on the industrial controller, memory can be allocated to the at least one program on the industrial controller.

The allocated memory is analyzed in item 206. The analysis includes scanning of the memory to identify one or more data structures stored in the memory and verifying the one or more data structures based at least in part on metadata of the at least one program. The analysis of the memory in item 206 may be performed synchronous or asynchronous to the executing program. A synchronous analysis of the memory may consume additional resources of the industrial controller, which may influence real-time behavior of the industrial controller. However, a synchronous test may analyze the program in any state of the program, thereby providing a fine granular analysis of execution of the program. Hence, a synchronous analysis may identify a fault condition, which might be missed by an asynchronous analysis of the memory due to their temporal appearance. On the other hand, an asynchronous analysis may be better suitable for industrial controllers with limited processing resources. An asynchronous analysis of the memory may require that the core dump is generated at pre-defined points during execution of the program that avoid invalid states. Invalid states may occur, for example, during copying of a string to a destination string, where the destination string may temporarily not be terminated, and the like.

The memory analysis in item 206 may either be executed on the industrial controller or by an external debugger, which may be used to analyze error states of the industrial controller.

The memory analysis may be initiated at predefined stages, such as at predefined points in time during execution of the program, such as at break points; responsive to a condition of the program, such as an exception; or may be explicitly initiated by code or an instruction of the program, which may be triggered from within the program or from the outside, such as by a command from a monitoring device of the industrial controller. For example, the memory analysis 206 may be initiated at one or more of the following: automatically at an exception; during debugging at a break point as triggered by a programmer; periodically at predetermined points in time during execution of the program to detect fault conditions even before they lead to unpredictable behavior of the industrial controller and the control process, for example, by using extensions of the program; during execution of the program, wherein a programmer may explicitly initiate the analysis via a debugger (which may also include a further identification of the memory to be analyzed received from the debugger); and/or a call to a system function from within the program, which may trigger execution of the analysis on the industrial controller or a respective creation of a core dump and transmission of the core dump to the connected debugger on a further computing device, in any combination.

Based on the analyzed data structures and the metadata in item 206, the method 200 may determine in item 208 whether a current data structure (with regard to the corresponding code of the program according to the metadata) represents a fault condition. The determination in item 208 may be based on a set of one or more criteria or rules, which identify incorrect configurations of the memory. The criteria or rules may, for example, comprise one or more of the following, in any combination:
1. For a variable of type pointer or reference that is not NULL, the respective data structure in the memory is determined. If the pointer or reference is not pointing into a configured memory area or if the pointer or reference is pointing to a data structure of a different type than the declared type for the pointer or reference, then the variable and the corresponding data structure is considered as an incorrect configuration or a possibly incorrect configuration.
2. Pointers generated by a system, such as the runtime environment of the industrial controller or an operating system of the runtime controller, are required to have a particular structure and content:
   - Typically, each object has a pointer to a virtual method table. If the pointer is not pointing to a correct table, the pointer and the corresponding data structure are identified as incorrect or possibly incorrect.
   - Virtual method tables include pointers to methods in the code of the program. If the pointers do not point to valid methods or functions in the code of the program, the respective pointer and corresponding data structure are identified as incorrect or possibly incorrect.
   - Typically, function calls and calls to function blocks are implicitly realized via function pointers. If the function pointer is not pointing to the correct function, the pointer is identified as incorrect or possibly incorrect.
3. Variables of type BOOL are typically assigned one byte in memory to represent the True and False values, for example using predefined values, such as 0 or 1. If the data structure associated with the variable does not have one of the predefined values, it is regarded as incorrect or possibly incorrect.
4. If a pointer or reference is pointing to a data type with parameters directed at an alignment of memory space, a corresponding data structure may be analyzed with regard to these parameters. For example, variables of simple data type are placed at memory locations that are multiples of the size of the data type in order to enable a processing resource of the industrial controller to efficiently access the data (with an optimal performance). Hence, a wrongly aligned data structure may be identified as incorrect or possibly incorrect.
5. Variables of type STRING or WSTRING may have a maximum length, as defined, for example, in the IEC 61131-3 standard. This type of variables may either include an indication of a length of the string at the beginning of the reserved memory space or the string may be terminated using a control character, such as "\0". If a data structure of a type STRING or WSTRING is neither terminated using the control character, or if an initial value does not correspond to a length of the data structure, or if a length of the string is larger than the maximum length of the string, then the variable and the respective data structure are identified as incorrect or possibly incorrect.
6. A variable of type enumeration may be analyzed by determining, whether a value for the variable is within a defined range for the enumeration. If not, the variable and the corresponding data structure is identified as incorrect or possibly incorrect.
7. With regard to a variable of type subrange as defined in the IEC 61131-3 standard, the corresponding value has to be in the predefined range. If not, the variable and the corresponding data structure are identified as incorrect or possibly incorrect.
8. Variables that are declared as constants may be analyzed with regard to the initially set value. If the value of the variable has changed during execution, the variable and the corresponding data structure are identified as incorrect or possibly incorrect.
9. Code of generated program organization units, as defined in the IEC 61131-3 standard, can be analyzed with regard to the last transmitted content. This may include a determination of differences in references in the executed code at the industrial controller to data or code elements of the program in relocated form, i.e. with addresses that may depend on a start address that may be different at each start of the industrial controller. Differences may be identified as an incorrect configuration or a possibly incorrect configuration.

Each rule may be associated with a score indicating a probability or likeliness of an incorrect configuration. For example, the score may range between 0.0 and 1.0 to indicate that a detected condition is most likely correct or to indicate that the detected condition is completely incorrect, respectively.

It is to be understood that the above enumeration represents an example of a set of rules. According to embodiments of the present disclosure, any combination, subset or permutation of the rules or different and additional rules may be used in the set of rules, in any combination.

If the verification of the at least one data structure and corresponding code in the program in item 208 does not results in any fault condition, the method 200 may proceed with item 210 by identifying a next at least one data structure and corresponding code in the program in item 210, which may be further analyzed in items 206 and 208and the method 200 may re-iterate.

If at least one fault condition is identified in item 208, the method 200 may proceed with item 212, where a notification indicating the fault condition may be provided. Additionally or as an alternative, the method 200 may analyze the entire memory and/or respective data structures and codes of the program and may provide the notification in item 212, which may summarize all identified fault conditions of the memory. For example, each identified fault condition may be associated with a score reflecting a severity of the fault condition or probability of an erroneous operation. The method 200 may analyze and/or combine the scores and provide one or more respective notifications in item 212. The method may end in item 214.

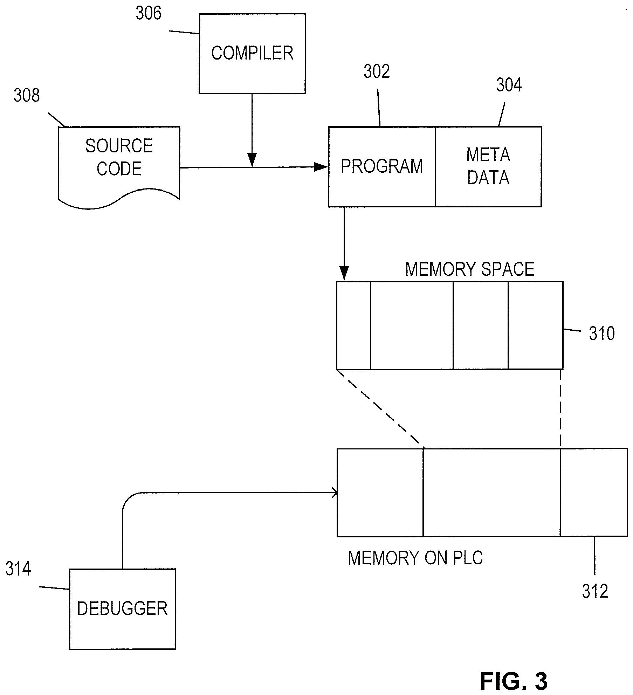

Fig. 3 shows a schematic illustration of generation of a program for an industrial controller and an analysis of allocated memory applicable in one or more embodiments of the present disclosure.

The program 302 and corresponding metadata 304 may be generated by a compiler 306 from source code 308. The source code may be written using any programming language for industrial controllers, such as any programming languages defined in the IEC 61131-3 standard, 3^{rd} edition. However, it is to be understood that the present invention is not restricted to a particular programming language. Rather, any programming language and a respective generated program or code may be automatically analyzed using embodiments of the present disclosure. The compiler 306 may compile the source code 308 for a respective target industrial controller and generate the program 302 that is executable on the industrial controller. The metadata 304 may include information about one or more of position of code and position of variables and data, data types of variables, structure of the data types and the like, in any combination.

The compiler 306 may statically allocate memory space 310 to the program 302 at compile time. In particular, for each variable in the program 302, a memory space corresponding to the length of the data type of the variable is assigned. Any variable or position of data in memory space 310 may be defined using a base address and an offset.

As shown in Fig. 3, the statically allocated memory space may be relocated to a memory 312 of the industrial controller in response to a download of the program 302 to the industrial controller or an execution of the program 302 on the industrial controller. This may require a relocation of the relative address values in memory space 310 to the allocated location in the memory 312.

Responsive to an execution of the program 302 on the industrial controller, such as synchronous to the execution of the program 302 or asynchronous to the execution of the program 302 on the industrial controller, a debugger 314 may analyze the allocated memory 312 and the metadata 304 of the program 302 to identify fault conditions in the part of the memory 312 allocated to the program 302. The debugger 314 may be executed on the industrial controller, such as within a runtime environment of the industrial controller or on any other suitable processing component of the industrial controller. However, additionally or as an alternative the debugger 314 may be executed on an external processing device. Based on a location of the debugger 314, the debugger 314 may either directly access the memory 312 of the industrial controller or may receive a core dump of the memory 312 (and the metadata 304) from the industrial controller.

The analysis of the debugger 314 may be based on a determination whether parts of the memory 312 (or of a respective core dump) fulfill one or more criteria or rules, based on the type and values of data stored therein and respective code of the program 302 as identified by the metadata 304. For example, the debugger 314 may be configured to execute the method 200 as shown in Fig. 2 in order to identify fault conditions in the memory 312.

The analysis of the memory 312 may be triggered by extensions of the program 302. For example, at execution time, a corresponding program element may be called. The program elements may be generated by the compiler 306 as dedicated analysis code, which may trigger the analysis of the memory 312. Additionally or as an alternative, a runtime system of the industrial controller or a library which may be compiled into the program 302 by the compiler 306 may include analysis or test functions, which may trigger the analysis of the memory 312 based on the metadata 304, which may, for example, include a list of initialized data or data structures.

In order to determine a correct address alignment, the analysis of memory 312 may first start with (unrelocated) addresses in memory space 310, which may be translated using the base address and relative adresses to a corresponding absolute address in the allocated memory 312.

Subsequently, the analysis of memory 312 may, in one exemplifying embodiment, be based on the type of a variable, object or code. For example, variables of type BOOL, or STRING/WSTRING, the absolute address and the size of the respective variables is used to perform the analysis according to one embodiment of the present disclosure. Furthermore, a test of objects for valid pointers to virtual method tables and a test of virtual method tables or function pointers may be performed using the absolute address of the respective pointer in the virtual method table and the expected address of the virtual method table. Additionally or as an alternative, pointers may be tested with regard to valid alignment using the absolute address of the respective pointer and the requirement of the alignment. Furthermore, enumerations and variables of type subrange may be tested using the absolute address and the size of the respective variable as well as valid values of the enumeration or a valid value range of the subrange. Likewise, constant values may be tested based on the absolute address and the size of the respective constant variable as well as the expected value for small data types or a respective check sum for the expected value. Additionally, code can be tested using the address and the size of the respective program code element as well as a check sum of the content of the code element.

The analysis of constant variables and code based on check sums preferably takes into consideration references to data, which may be relocated. Any relocation should be taken into consideration when calculating the check sum over unrelocated addresses (those in memory space 310). This may require information related to the relocated addresses, such as a base address in memory 312 and the like. The check sums may be generated using standard algorithms, such as approaches for calculating a 32 bit CRC check sum.

The tests and the analysis may be performed according to one or more embodiments of the present disclosure, such as, for example, discussed above with regard to method 200 of Fig. 2. It is to be understood that the criteria and rules are an example only and the analysis of memory 312 may be based on more or less criteria or rules or a different set of criteria or rules, in any combination.

In order to determine the absolute addresses, the debugger 314 may request a base address area of the runtime environment of the industrial controller. This may enable the debugger 314 to associate absolute addresses of the executed program 302 to unrelocated addresses in memory space 310 in order to enable the analysis of memory 312 as discussed above.

In order to enable debugger 314 to access the memory of the industrial controller, the debugger 314 may include corresponding means or components that may either retrieve a core dump of the industrial controller or directly access the memory 312 of the industrial controller. This may enable the debugger 314 to have access to values of the memory 312 at runtime. Using the information of the compiled process, in particular the metadata 304 and the current values of the memory 312 of the industrial controller as well as the corresponding base addresses, the debugger 314 may perform the analysis of the memory 312 as discussed above.

The analysis of memory on the industrial controller may further take into consideration programming conventions and requirements with regard to memory management of the program 302. For example, a programmer may define for each variable properties of the variable, such as a range of values of the variable or conditions that are to be fulfilled by one or more variables. For example, a definition of an attribute "{attribute 'value-constraint' := 'a > 100 AND a <= 2 ^{∗} b'}, a:INT", may specify a particular value constraint for variables a and b. If current values of variables a and b do not fulfill the constraint, the variables and respective data structures are identified as incorrect (or possibly incorrect using a score).

The source code 308 may also identify portions of the program 302 that are to be checked. For example, if an individual class is marked, all objects of the class, individual variables or individual program organization units related to the class will be checked. Furthermore, a memory area of memory space 310 may be defined in the source code 308, for which a check is to be performed. For example, the memory area may be defined using an address range (with a start and end addresses) of the memory area.

The memory analysis may be further based on the convention that all unused memory is initialized using a predetermined pattern, such as 0xDEADBEEF or 0xBAADF00D. If an unused memory area without the predetermined pattern is detected, the unused area is identified as possibly incorrect.

The memory analysis may be performed in response to a request from a management user interface or console, which may be issued, for example, by a user or programmer. The test may be directed at validity of an address or a particular type of a functional element of the program 302, or at the entire address space of the program 302. Furthermore, if the execution has stopped at a break point, the memory analysis may be performed on all variables that are on a call stack of the program 302.

The compiler 306 may further provide one or more compile options, which may result in an allocation of additional memory space after each variable or each variable of type array, wherein the additional memory space may be initialized using a specific value, such as 0xAA55AA55. If this pattern is overwritten, the variable may be identified as possibly incorrect.

The following describes an example corresponding to one or more embodiments as discussed above with regard to Figs. 1 to 3. The example includes program code according to the IEC 61131-3 standard, 3rd edition. The example includes a function block and a program generating a memory overwrite that results in a fault condition. It is to be understood that the program code is for illustrative purposes only. The program is shown in Table 1.

**Table 1: Source code of an example program.**

| | |
|---|---|
| FUNCTION_BLOCK FB | |
| VAR | |
| intern : DINT := 123; | |
| END_VAR | |
| METHOD PUBLIC m : DINT | |
| m := intern; | // m includes the return value |
| | // of the function |
| intern := intern + 1; | |
| IF intern > 16#7fff_ff00 THEN | |
| prt(); | // this call is typically |
| | // implemented as a virtual method call |
| intern := intern - 1; | // we want to avoid an overflow |
| END_IF | |
| END_METHOD | |
| METHOD PROTECTED prt : DINT | |
| CONSOLE_PRINT_WARNING('DANGER_OF_OVERFLOW | in intern'); |
| END_METHOD | |
| END_FUNCTION_BLOCK | |
| PROGRAM PRG | |
| VAR | |
| arr : ARRAY [0..9] OF DINT; | |
| inst : FB; | |
| index, test : DINT; | |
| END_VAR | |
| | |
| FOR index := 0 TO 10 DO | |
| arr[index] := index; | // index 10 will generate |
| | // an overwrite |
| END_FOR | |
| test := inst.m(); | // typically, this call will |
| | // not be performed using a |
| | // pointer and should still |
| | // be "good". |
| END_PROGRAM | |

The program shown in Table 1 will behave as follows: The variable test of the program PRG will count from 123 to 16#7fff_ff00 (corresponding to 2,147,483,392). If that happens, the local method PRT will be called, which will output a notification on a console using the function CONSOLE_PRINT_WARNING.

The allocated memory of the executing program code may have the following exemplifying memory structure for data:

| Memory-Offset | Data | Size of Data |
|---|---|---|
| 0 | PRG.arr | 40 |
| 40 | PRG.inst | 8 |
| 48 | PRG.index | 4 |
| 52 | PRG.test | 4 |
| 56 | VFTable_FB | 8 |

Each instance of the function block FB has the following form:

| Memory-Offset | Data | Size of Data |
|---|---|---|
| 0 | _VFTablePointer | 4 |
| 4 | intern | 4 |

The virtual method table of function block FB has the following structure:

| Memory-Offset | Data | Size of Data |
|---|---|---|
| 0 | POINTER TO M | 4 |
| 4 | POINTER TO prt | 4 |

The above listings do not include return values of methods, which will be dynamically allocated on a stack, which will typically be located in a different memory area.

Based on the above memory structure, the program code will crash as soon as the method m of function block FB calls method PRT. This is due to the fact that the method call will typically be generated as a virtual method call. This method call is performed implicitly using the pointer to the virtual method table _VFTablePointer. However, this pointer will be overwritten in the instance PRG. inst upon access to the array arr.

After initialization of memory before program start, the memory for the above example will be assumed to have the following content, wherein the base address for the data has the address 0xA0000000. All pieces of executable code are located in memory starting at address 0xB0000000. It is to be understood that addresses and values using the format "0x..." define a hexadecimal notation of values that are commonly used in computer technology. However, it is to be understood that the embodiments and examples of the present disclosure are not limited to hexadecimal values, which are only used for better legibility. In the following example, a big endian byte order is assumed, which is known by the skilled person to be utilized, for example, on the PowerPC processor architecture. In the subsequent table, OK/NOK identify memory entries having an expected value (OK) or not (NOK).

**Table 2: memory content after initialization.**

| Address | Content | Data | OK / NOK |
|---|---|---|---|
| 0xA0000000: | 0000 0000 | PRG.arr[0] | OK |
| 0xA0000004: | 0000 0000 | PRG.arr[1] | OK |
| 0xA0000008: | 0000 0000 | PRG.arr[2] | OK |
| 0xA000000C: | 0000 0000 | PRG.arr[3] | OK |
| 0xA0000010: | 0000 0000 | PRG.arr[4] | OK |
| 0xA0000014: | 0000 0000 | PRG.arr[5] | OK |
| 0xA0000018: | 0000 0000 | PRG.arr[6] | OK |
| 0xA000001C: | 0000 0000 | PRG.arr[7] | OK |
| 0xA0000020: | 0000 0000 | PRG.arr[8] | OK |
| 0xA0000024: | 0000 0000 | PRG.arr[9] | OK |
| **0xA0000028:** | **A000 0038** | **PRG.inst.VFTablePointer** | **OK** |
| OxA000002C: | 0000 007B | PRG.inst.intern | OK |
| 0xA0000030: | 0000 0000 | PRG.index | OK |
| 0xA0000034: | 0000 0000 | PRG.test | OK |
| **0xA0000038:** | **B000 1000** | **VFTable_FB.pm** | **OK** |
| **0xA000003C:** | **B000 2000** | **VFTable_FB.pprt** | **OK** |

Table 2 shows as an example (a part of) a complete core dump of the memory allocated to the program on an industrial controller. The core dump may be retrieved by a programming system (or debugger) after initialization of the program from the industrial controller and may be displayed to a programmer. As shown in Table 2, all data have the expected values at this point in time. The starting addresses of the methods m and prt that are necessary to initialize the virtual function table are also assigned by the compiler. Therefore those addresses can also be checked.

Table 2 emphasizes in bold face memory areas that cannot change with static memory management. These areas may be tested by the programming system or the generated code on the runtime environment of the industrial controller. At each point in time, at which the memory content is analyzed, the values at these areas must have the same values as the initial values.

In order to analyze the memory, a compiler may generate a dedicated program portion suitable for testing the memory of the program at runtime. One example of the program portion could be as follows:

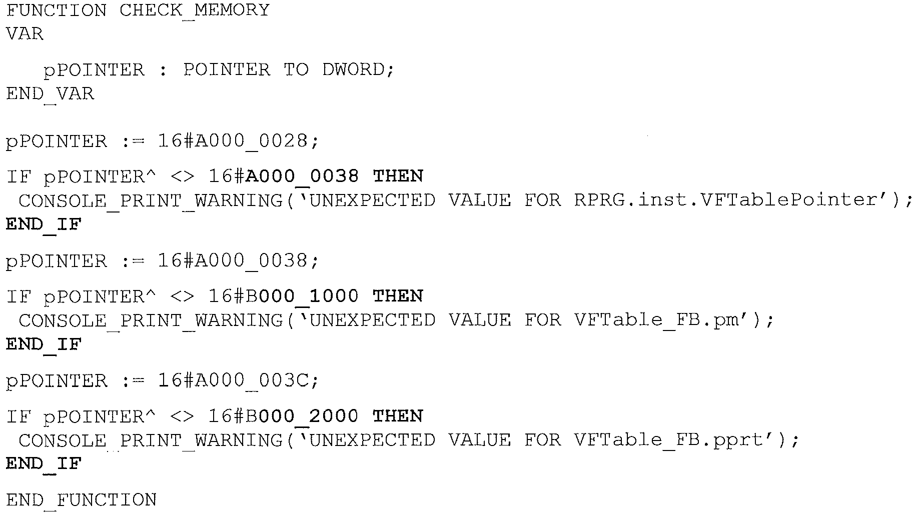

It is to be understood that absolute addressed will be known as soon as the memory is relocated on the industrial controller. This could be achieved, for example, by using relocation tables that enable computation of the absolute addresses on the industrial controller.

At execution of the program as shown in Table 1, a memory overwrite is generated in the first cycle, which may, however, result in a crash after a longer period of time. A core dump of allocated memory after execution of the first cycle is shown in Table 3.

**Table 3: memory content after first cycle.**

| Address | Content | Data | OK / NOK |
|---|---|---|---|
| 0xA0000000: | 0000 0000 | PRG.arr[0] | OK |
| 0xA0000004: | 0000 0001 | PRG.arr[1] | OK |
| 0xA0000008: | 0000 0002 | PRG.arr[2] | OK |
| 0xA000000C: | 0000 0003 | PRG.arr[3] | OK |
| 0xA0000010: | 0000 0004 | PRG.arr[4] | OK |
| 0xA0000014: | 0000 0005 | PRG.arr[5] | OK |
| 0xA0000018: | 0000 0006 | PRG.arr[6] | OK |
| 0xA000001C: | 0000 0007 | PRG.arr[7] | OK |
| 0xA0000020: | 0000 0008 | PRG.arr[8] | OK |
| 0xA0000024: | 0000 0009 | PRG.arr[9] | OK |
| **0xA0000028:** | **0000 000A** | **PRG.inst.VFTablePointer** | **NOK** |
| 0xA000002C: | 0000 007C | PRG.inst.intern | OK |
| 0xA0000030: | 0000 000A | PRG.index | OK |
| 0xA0000034: | 0000 007B | PRG.test | OK |
| **0xA0000038:** | **B000 1000** | **VFTable_FB.pm** | **OK** |
| **0xA000003C:** | **B000 2000** | **VFTable_FB.pprt** | **OK** |

Table 3 can be used as an example enabling an automatic determination that a fault condition is present in the memory, according to embodiments of the present invention. Using the results of the analysis, the error source, which may be a writing beyond the range of array a, may be automatically determined or a programmer may identify the error source.

Based on the identified fault condition, the industrial controller may be transitioned into a safe state and a programmer or operator of the industrial controller may be further notified about the fault condition and the current state of the industrial controller.

## Claims

1. A computer-implemented method for analyzing allocated memory of an industrial controller comprising:
providing (204) at least one program for execution on an industrial controller;
analyzing (206) a memory allocated to the at least one program on the industrial controller, based at least in part on metadata of the at least one program, wherein said analyzing (206) includes scanning the memory to identify one or more data structures stored in the memory and verifying the one or more data structures based at least in part on the metadata of the at least one program;
identifying at least one fault condition indicative of an erroneous use of the allocated memory by the program in the memory for each incorrect configuration of a data structure of the one or more data structures or if no correct configuration of a data structure of the one or more data structures can be determined based on a set of rules; and
in response to the identified at least one fault condition, providing (212) a notification including an indication of the at least one fault condition.

2. The method of claim 1, wherein the program includes at least one pointer or reference to access the at least one data structure in the memory.

3. The method of claim 1 or 2, wherein said verifying includes determining one or more parameters of the at least one data structure and checking the one or more parameters against corresponding metadata of the at least one program.

4. The method of claim 3, wherein the at least one fault condition is identified responsive to said checking of the one or more parameters against the corresponding metadata of the at least one program.

5. The method according to one of the preceding claims, further comprising in response to the identified at least one fault condition, transitioning the industrial controller into a safe state.

6. The method according to one of the preceding claims, wherein memory space is statically allocated to the at least one program by a compiler.

7. The method of claim 6, further comprising downloading the at least one program to the industrial controller and relocating the memory space to the memory of the industrial controller.

8. The method of one of the preceding claims, wherein the at least one program is executed on the industrial controller within a runtime system.

9. The method of claim 8, wherein the memory is analyzed on the industrial controller using the runtime system.

10. The method of one of the preceding claims, wherein the memory is analyzed based on a core dump of the memory.

11. The method of one of the preceding claims, wherein the industrial controller is a programmable logic controller (PLC).

12. One or more media storing instructions thereon that, when executed on a computing device, configure the computing device to perform a method according to one of the preceding claims.

13. An industrial controller, comprising:
at least one processor configured to execute a program (108) for the industrial controller (102); and
a memory resource (110) including memory allocated to the program (108), wherein the at least one processor is further configured to:
analyze the allocated memory based at least in part on metadata of the at least one program (108), wherein said analyzing includes scanning the memory to identify one or more data structures stored in the memory and verifying the one or more data structures based at least in part on the metadata of the at least one program (108);
identify at least one fault condition indicative of an erroneous use of the allocated memory by the program in the memory for each incorrect configuration of a data structure of the one or more data structures or if no correct configuration of a data structure of the one or more data structures can be determined based on a set of rules; and
in response to the identified at least one fault condition, provide a notification including an indication of the at least one fault condition.

14. A system, comprising:
at least one industrial controller configured to execute at least one program (302); and
a debugger (314),
wherein the debugger (314) is configured to analyze a memory (312) allocated to the program (302) on the industrial controller, based at least in part on metadata (304) of the at least one program (203), wherein said analyzing includes scanning the memory (312) to identify one or more data structures stored in the memory and verifying the one or more data structures based at least in part on the metadata (304) of the at least one program (302), to identify at least one fault condition indicative of an erroneous use of the allocated memory by the program in the memory (312) for each incorrect configuration of a data structure of the one or more data structures or if no correct configuration of a data structure of the one or more data structures can be determined based on a set of rules, and in response to the identified at least one fault condition, to provide a notification including an indication of the at least one fault condition.

## Patentansprüche

1. Computerimplementiertes Verfahren zum Analysieren eines zugewiesenen Speichers einer Industriesteuereinrichtung, das Folgendes umfasst:
Bereitstellen (204) von mindestens einem Programm zur Ausführung auf einer Industriesteuereinrichtung;
Analysieren (206) eines Speichers, der dem mindestens einen Programm auf der Industriesteuereinrichtung zugewiesen ist, zumindest teilweise auf der Grundlage von Metadaten des mindestens einen Programms, wobei das Analysieren (206) das Abtasten des Speichers, um eine oder mehrere Datenstrukturen, die in dem Speicher gespeichert sind, zu identifizieren, und das Verifizieren der einen oder mehreren Datenstrukturen zumindest teilweise auf der Grundlage der Metadaten des mindestens einen Programms enthält;
Identifizieren mindestens einer Fehlerbedingung, die eine fehlerhafte Verwendung des zugewiesenen Speichers durch das Programm angibt, im Speicher für jede inkorrekte Konfiguration einer Datenstruktur der einen oder mehreren Datenstrukturen oder dann, wenn keine korrekte Konfiguration einer Datenstruktur der einen oder mehreren Datenstrukturen bestimmt werden kann, auf der Grundlage einer Gruppe von Regeln; und
als Antwort auf die identifizierte, mindestens eine Fehlerbedingung, Bereitstellen (212) einer Meldung, die eine Angabe der mindestens einen Fehlerbedingung enthält.

2. Verfahren nach Anspruch 1, wobei das Programm mindestens einen Zeiger oder mindestens eine Referenz, um auf die mindestens eine Datenstruktur im Speicher zuzugreifen, enthält.

3. Verfahren nach Anspruch 1 oder 2, wobei das Verifizieren das Bestimmen eines oder mehrerer Parameter der mindestens einen Datenstruktur und das Prüfen des einen oder der mehreren Parameter gegen entsprechende Metadaten des mindestens einen Programms enthält.

4. Verfahren nach Anspruch 3, wobei die mindestens eine Fehlerbedingung als Antwort auf das Prüfen des einen oder der mehreren Parameter gegen die entsprechenden Metadaten des mindestens einen Programms identifiziert wird.

5. Verfahren nach einem der vorhergehenden Ansprüche, das ferner das Überführen der Industriesteuereinrichtung in einen sicheren Zustand als Antwort auf die identifizierte, mindestens eine Fehlerbedingung umfasst.

6. Verfahren nach einem der vorhergehenden Ansprüche, wobei dem mindestens einen Programm durch einen Compiler auf statistische Weise Speicherplatz zugewiesen wird.

7. Verfahren nach Anspruch 6, das ferner das Herunterladen des mindestens einen Programms auf die Industriesteuereinrichtung und das erneute Zuweisen des Speicherplatzes an den Speicher der Industriesteuereinrichtung umfasst.

8. Verfahren nach einem der vorhergehenden Ansprüche, wobei das mindestens eine Programm innerhalb eines Laufzeitsystems auf der Industriesteuereinrichtung ausgeführt wird.

9. Verfahren nach Anspruch 8, wobei der Speicher unter Verwendung des Laufzeitsystems auf der Industriesteuereinrichtung analysiert wird.

10. Verfahren nach einem der vorhergehenden Ansprüche, wobei der Speicher auf der Grundlage eines Hauptspeicherausdrucks des Speichers analysiert wird.

11. Verfahren nach einem der vorhergehenden Ansprüche, wobei die Industriesteuereinrichtung eine programmierbare Logiksteuereinrichtung (PLC) ist.

12. Ein oder mehrere Medien, auf denen Anweisungen gespeichert sind, die dann, wenn sie auf einer Rechenvorrichtung ausgeführt werden, die Rechenvorrichtung konfigurieren, ein Verfahren nach einem der vorhergehenden Ansprüche durchzuführen.

13. Industriesteuereinrichtung, die Folgendes umfasst:
mindestens einen Prozessor, der konfiguriert ist, ein Programm (108) für die Industriesteuereinrichtung (102) auszuführen; und
ein Speicherbetriebsmittel (110), das einen Speicher enthält, der dem Programm (108) zugewiesen ist,
wobei der mindestens eine Prozessor ferner konfiguriert ist zum:
Analysieren des zugewiesenen Speichers zumindest teilweise auf der Grundlage von Metadaten des mindestens einen Programms (108), wobei das Analysieren das Abtasten des Speichers, um eine oder mehrere Datenstrukturen, die im Speicher gespeichert sind, zu identifizieren, und das Verifizieren der einen oder mehreren Datenstrukturen zumindest teilweise auf der Grundlage der Metadaten des mindestens einen Programms (108) enthält;
Identifizieren mindestens einer Fehlerbedingung, die eine fehlerhafte Verwendung des zugewiesenen Speichers durch das Programm angibt, im Speicher für jede inkorrekte Konfiguration einer Datenstruktur der einen oder mehreren Datenstrukturen oder dann, wenn keine korrekte Konfiguration einer Datenstruktur der einen oder mehreren Datenstrukturen bestimmt werden kann, auf der Grundlage einer Gruppe von Regeln; und
als Antwort auf die identifizierte, mindestens eine Fehlerbedingung, Bereitstellen einer Meldung, die eine Angabe der mindestens einen Fehlerbedingung enthält.

14. System, das Folgendes umfasst:
mindestens eine Industriesteuereinrichtung, die konfiguriert ist, mindestens ein Programm (302) auszuführen; und
ein Fehlersuchprogramm (314),
wobei das Fehlersuchprogramm (314) konfiguriert ist, einen Speicher (312), der dem Programm (302) auf der Industriesteuereinrichtung zugewiesen ist, zumindest teilweise auf der Grundlage von Metadaten (304) des mindestens einen Programms (203) zu analysieren, wobei das Analysieren das Abtasten des Speichers (312), um eine oder mehrere Datenstrukturen, die im Speicher gespeichert sind, zu identifizieren, und das Verifizieren der einen oder mehreren Datenstrukturen zumindest teilweise auf der Grundlage der Metadaten (304) des mindestens einen Programms (302), um mindestens eine Fehlerbedingung, die eine fehlerhafte Verwendung des zugewiesenen Speichers durch das Programm angibt, im Speicher (312) für jede inkorrekte Konfiguration einer Datenstruktur der einen oder mehreren Datenstrukturen oder dann, wenn keine korrekte Konfiguration einer Datenstruktur der einen oder mehreren Datenstrukturen bestimmt werden kann, auf der Grundlage einer Gruppe von Regeln zu identifizieren, enthält, und als Antwort auf die identifizierte, mindestens eine Fehlerbedingung eine Meldung bereitzustellen, die eine Angabe der mindestens einen Fehlerbedingung enthält.

## Revendications

1. Procédé, mis en œuvre par ordinateur, d'analyse d'une mémoire allouée d'un automate industriel comprenant les étapes ci-dessous consistant à :
fournir (204) au moins un programme destiné à être exécuté sur un automate industriel ;
analyser (206) une mémoire allouée audit au moins un programme sur l'automate industriel, sur la base, au moins en partie, de métadonnées dudit au moins un programme, dans lequel ladite étape d'analyse (206) inclut l'étape consistant à balayer la mémoire pour identifier une ou plusieurs structures de données stockées dans la mémoire, et l'étape consistant à vérifier ladite une ou lesdites plusieurs structures de données sur la base, au moins en partie, des métadonnées dudit au moins un programme ;
identifier au moins une condition de défaut indicative d'une utilisation erronée de la mémoire allouée par le programme dans la mémoire, pour chaque configuration incorrecte d'une structure de données de ladite une ou desdites plusieurs structures de données, ou si aucune configuration correcte d'une structure de données de ladite une ou desdites plusieurs structures de données ne peut être déterminée sur la base d'un ensemble de règles ; et
en réponse à ladite au moins une condition de défaut identifiée, fournir (212) une notification incluant une indication de ladite au moins une condition de défaut.

2. Procédé selon la revendication 1, dans lequel le programme inclut au moins un pointeur ou une référence pour accéder à ladite au moins une structure de données dans la mémoire.

3. Procédé selon la revendication 1 ou 2, dans lequel ladite étape de vérification inclut l'étape consistant à déterminer un ou plusieurs paramètres de ladite au moins une structure de données et l'étape consistant à vérifier ledit un ou lesdits plusieurs paramètres par rapport à des métadonnées correspondantes dudit au moins un programme.

4. Procédé selon la revendication 3, dans lequel ladite au moins une condition de défaut est identifiée en réponse à ladite étape de vérification dudit un ou desdits plusieurs paramètres par rapport aux métadonnées correspondantes dudit au moins un programme.

5. Procédé selon l'une quelconque des revendications précédentes, comprenant en outre, en réponse à ladite au moins une condition de défaut identifiée, l'étape consistant à effectuer une transition de l'automate industriel vers un état sécurisé.

6. Procédé selon l'une quelconque des revendications précédentes, dans lequel un espace mémoire est alloué statiquement audit au moins un programme par un compilateur.

7. Procédé selon la revendication 6, comprenant en outre l'étape consistant à télécharger ledit au moins un programme vers l'automate industriel, et l'étape consistant à relocaliser l'espace mémoire vers la mémoire de l'automate industriel.

8. Procédé selon l'une quelconque des revendications précédentes, dans lequel ledit au moins un programme est exécuté sur l'automate industriel au sein d'un système d'exécution.

9. Procédé selon la revendication 8, dans lequel la mémoire est analysée sur l'automate industriel en faisant appel au système d'exécution.

10. Procédé selon l'une quelconque des revendications précédentes, dans lequel la mémoire est analysée sur la base d'un vidage de mémoire de la mémoire.

11. Procédé selon l'une quelconque des revendications précédentes, dans lequel l'automate industriel est un automate programmable industriel (PLC).

12. Un ou plusieurs supports sur lesquels sont stockées des instructions qui, lorsqu'elles sont exécutées sur un dispositif informatique, configurent le dispositif informatique pour mettre en œuvre un procédé selon l'une quelconque des revendications précédentes.

13. Automate industriel, comprenant :
au moins un processeur configuré de manière à exécuter un programme (108) pour l'automate industriel (102) ; et
une ressource mémoire (110) incluant une mémoire allouée au programme (108), dans lequel ledit au moins un processeur est en outre configuré de manière à :
analyser la mémoire allouée sur la base, au moins en partie, de métadonnées dudit au moins un programme (108), dans lequel ladite étape d'analyse inclut l'étape consistant à balayer la mémoire pour identifier une ou plusieurs structures de données stockées dans la mémoire, et l'étape consistant à vérifier ladite une ou lesdites plusieurs structures de données sur la base, au moins en partie, des métadonnées dudit au moins un programme (108) ;
identifier au moins une condition de défaut indicative d'une utilisation erronée de la mémoire allouée par le programme dans la mémoire, pour chaque configuration incorrecte d'une structure de données de ladite une ou desdites plusieurs structures de données, ou si aucune configuration correcte d'une structure de données de ladite une ou desdites plusieurs structures de données ne peut être déterminée sur la base d'un ensemble de règles ; et
en réponse à ladite au moins une condition de défaut identifiée, fournir une notification incluant une indication de ladite au moins une condition de défaut.

14. Système, comprenant :
au moins un automate industriel configuré de manière à exécuter au moins un programme (302) ; et
un débogueur (314) ;
dans lequel le débogueur (314) est configuré de manière à analyser une mémoire (312) allouée au programme (302) sur l'automate industriel, sur la base, au moins en partie, de métadonnées (304) dudit au moins un programme (203), dans lequel ladite étape d'analyse inclut l'étape consistant à balayer la mémoire (312) pour identifier une ou plusieurs structures de données stockées dans la mémoire et l'étape consistant à vérifier ladite une ou lesdites plusieurs structures de données sur la base, au moins en partie, des métadonnées (304) dudit au moins un programme (302), à identifier au moins une condition de défaut indicative d'une utilisation erronée de la mémoire allouée par le programme dans la mémoire (312), pour chaque configuration incorrecte d'une structure de données de ladite une ou desdites plusieurs structures de données, ou si aucune configuration correcte d'une structure de données de ladite une ou desdites plusieurs structures de données ne peut être déterminée sur la base d'un ensemble de règles, et en réponse à ladite au moins une condition de défaut identifiée, à fournir une notification incluant une indication de ladite au moins une condition de défaut.
